# EUROPEAN PATENT APPLICATION

(11) **EP 2 767 973 A1**
(43) Date of publication of application: **20.08.2014**
(21) Application number: 14155233.1
(22) Date of filing: 14.02.2014
(51) Int. Cl.: G09G 5/14, G06F 3/0481

(54) **User terminal and method of displaying image thereof**

(30) Priority: 15.02.2013 US 201361765147 P; 26.09.2013 KR 20130114316; 10.10.2013 US 201361889234 P; 24.01.2014 KR 20140008674
(71) Applicant: Samsung Electronics Co., Ltd., Suwon-si Gyeonggi-do 443-742 (KR)
(72) Inventor: Kwak, Young-min, Gyeonggi-do (KR); Park, Chan-min, Seoul (KR); Shin, Seung-ho, Gyeonggi-do (KR); Lee, Joon-seok, Gyeonggi-do (KR); Choi, Kang-sik, Gyeonggi-do (KR); Han, Jin-yong, Jeju-do (KR)
(74) Representative: Brandon, Paul Laurence

(57) **Abstract**

A user terminal (100) and a method of displaying an image that includes displaying a plurality of display layers having different depths that are overlapped with each other, and in response to a user input being sensed, changing a depth of at least one of the plurality of display layers according to the user input, and providing a visual effect in response to the user input.

## Description

### BACKGROUND OF THE INVENTION

### 1. Field of the Invention

The present general inventive concept generally relates to user terminals and methods of displaying an image thereof, and more particularly, to user terminals that display an image by using a plurality of display layers and methods of displaying an image thereof.

### 2. Description of the Related Art

Various kinds of user terminals (for example, a smart phone, a tablet personal computer (PC), and the like) are currently used. Most of these user terminals include a touch screen to sense a user input.

In response to a user input being sensed by a touch screen of a user terminal, the user terminal merely provides a two-dimensional image effect at a point where the user input is sensed. Because such a user terminal only provides a two-dimensional image effect, this image effect is limited because it is unrealistic and artificial.

Accordingly, it is desirable to seek a method of providing a more realistic and natural image in response to a user input.

### SUMMARY OF THE INVENTION

The present inventive concept provides a user terminal configured to provide a three-dimensional visual effect in response to a user input by using a plurality of display layers that have different depths, and a method of displaying an image thereof.

Additional features and utilities of the present general inventive concept will be set forth in part in the description which follows and, in part, will be obvious from the description, or may be learned by practice of the general inventive concept.

The foregoing and/or other features and utilities of the present inventive concept may be achieved by providing a method of displaying an image that includes displaying, on a user terminal, a plurality of display layers having different depths that are overlapped with each other, and in response to a user input being sensed, changing a depth of at least one of the plurality of display layers according to the user input, and providing a visual effect in response to the user input.

The plurality of display layers may include a first display layer configured to display the image and a second display layer configured to have a transparency of a surface of water.

The first display layer may have a fixed depth, and the second display layer may have a depth that is configured to change according to the user input.

The providing may include, in response to the user input being sensed, changing a depth of the second display layer at a point where the user input is sensed, and providing the visual effect in response to the user input at the point where the user input is sensed by using the first display layer and the second display layer having the depth changed according to the user input.

The providing the visual effect in response to the user input at the point where the user input is sensed may include calculating a refractive index and a reflectance at the point where the user input is sensed by using the first display layer and the second display layer having the depth changed according to the user input, and providing the visual effect in response to the user input according to the calculated refractive index and reflectance.

The visual effect may be a ripple effect.

When a display screen displays a plurality of display items, an area where the plurality of display items are displayed from the first display layer may have a high depth value, and an area where the plurality of display items are not displayed from the first display layer may have a low depth value.

The second display layer may have a depth value between the depth value of the area where the plurality of display items are displayed and the depth value of the area where the plurality of display items are not displayed.

The providing may include, in response to the user input being sensed on one of the plurality of display items, providing the visual effect in which a display item where the user input is sensed appears to submerge into water by adjusting a depth value of the first display layer at a point where the user input is sensed to be lower than the depth value of the second display layer.

The providing may include, in response to the user input being sensed as a tilt of the user terminal, changing the depth of the at least one of the plurality of display layers according to a degree of the tilt of the user terminal.

The plurality of display layers may include a a first display layer configured to display the image, a second display layer configured to have a preset transparency, and a third display layer configured to illustrate an effect of gravity.

The providing may include changing the depth of the third display layer so that a depth value at an area located in a direction opposite of a direction of the tilt of the user terminal is greater than depth values at other areas of the third display layer.

The providing may include providing the visual effect in which only a portion of the image that is displayed at the area in which the depth value of the third display layer is lower than a depth value of the second display layer appears to be submerged into water.

The providing may include providing a caustic effect to an area of the second display layer in which a depth value is within a preset range.

The providing the caustic effect may further include generating a caustic depth map, determining a caustic area in which a depth value is within the preset range by reversing the depth value of the second display layer, and interpolating the caustic depth map and the depth value of the caustic area.

The foregoing and/or other features and utilities of the present inventive concept also provide a user terminal that includes a display configured to display a plurality of display layers having different depths that are overlapped with each other, a user input unit configured to sense a user input, and a controller configured to control, in response to the user input being sensed by the user input unit, the display to change a depth of at least one of the plurality of display layers according the user input, and to provide a visual effect in response to the user input.

The plurality of display layers may include a first display layer configured to display an image and a second display layer configured to have a transparency of a surface of water.

The first display layer may have a fixed depth, and the second display layer may have a depth that is configured to change according to the user input.

In response to the user input being sensed by the user input unit, the controller may change a depth at a point where the user input is sensed from the second display layer, and may provide the visual effect in response to the user input at the point where the user input is sensed by using the first display layer and the second display layer having the depth changed according to the user input.

The controller may calculate a refractive index and a reflectance at the point where the user input is sensed by using the first display layer and the second display layer having the depth changed according to the user input, and may provide the visual effect in response to the user input according to the calculated refractive index and reflectance.

The visual effect may be a ripple effect.

When a display screen displays a plurality of display items, an area where the plurality of display items are displayed from the first display layer may have a high depth value, and an area where the plurality of display items are not displayed from the first display layer may have a low depth value.

The second display layer may have a depth value between the depth value of the area where the plurality of display items are displayed and the depth value of the area where the plurality of display items are not displayed.

In response to the user input being sensed on one of the plurality of display items, the controller may provide the visual effect in which a display item where the user input is sensed appears to submerge into water by adjusting a depth value of the first display layer at a point where the user input is sensed to be lower than the depth value of the second display layer.

The user input unit may further include a sensor configured to sense a tilt of the user terminal, wherein the controller may provide the visual effect, in response to the user input being sensed as the tilt of the user terminal, by changing the depth of the at least one of the plurality of display layers according to a degree of the tilt of the user terminal sensed through the sensor.

The plurality of display layers may include a third display layer configured to illustrate an effect of gravity effect and the transparency of the second display layer may be preset.

The controller may be configured to provide the visual effect, in response to the user input being sensed as the tilt of the user terminal, by changing the depth of the third display layer so that a depth value at an area located in a direction opposite of a direction of the tilt of the user terminal is greater than depth values at other areas of the third display layer.

The controller may be configured to provide the visual effect, in response to the user input being sensed as the tilt of the user terminal, in which only a portion of the image that is displayed at the area in which the depth value of the third display layer is lower than a depth value of the second display layer appears to be submerged into water.

The controller may be configured to provide the visual effect, in response to the user input being sensed as the tilt of the user terminal, by providing a caustic effect to an area of the second display layer in which a depth value is within a preset range.

The controller may be configured to provide the caustic effect by generating a caustic depth map, determining a caustic area in which a depth value is within the preset range by reversing the depth value of the second display layer, and interpolating the caustic depth map and the depth value of the caustic area.

The display may have a curved shape.

The foregoing and/or other features and utilities of the present inventive concept also provide a user terminal that includes a display configured to display images on layers having overlapping depths, a user input unit configured to sense a signal from a user, and a controller configured to control, in response to the signal, the display to change a depth at a portion of at least one of the layers to provide a visual effect.

A first layer of the layers may have a fixed depth and a second layer of the layers may have a changeable depth.

A first layer of the layers may be an image layer and a second layer of the layers may be a semitransparent layer.

A first layer of the layers may have a first depth at a location of an object and a second depth at another location and a second layer of the layers may have a third depth.

The third depth may be between the first depth and the second depth.

The location of the object may be a location of the portion and the controller may be configured to control, in response to the signal, the display to change the depth at the portion from the first depth to a fourth depth.

The fourth depth may be between the third depth and the second depth.

The visual effect may include an appearance that an object at the portion is submerged into water and that a ripple occurs.

The appearance may include an effect of refraction between a light source and the object and an effect of reflection between the light source and the object.

The effect of reflection may include a specular highlight.

The foregoing and/or other features and utilities of the present inventive concept also provide a method of displaying an image that includes controlling, at a controller, a display of images on layers having overlapping depths, receiving, at the controller, a signal from a user, and causing, at the controller in response to the signal, the display to change a depth at a portion of at least one of the layers to provide a visual effect.

The foregoing and/or other features and utilities of the present inventive concept also provide a non-transitory computer-readable recording medium containing instructions which, when executed by the controller, cause the controller to control a display of images on layers having overlapping depths, to receive a signal from a user, and to cause, in response to the signal, the display to change a depth at a portion of at least one of the layers to provide a visual effect.

### BRIEF DESCRIPTION OF THE DRAWINGS

These and/or other features and utilities of the present inventive concept will become apparent and more readily appreciated from the following description of the embodiments, taken in conjunction with the accompanying drawings of which:
FIG. 1 is a block diagram illustrating a configuration of a user terminal according to an exemplary embodiment of the present inventive concept;
FIG. 2 is a block diagram illustrating a configuration of a user terminal according to an exemplary embodiment of the present inventive concept;
FIG. 2A is a block diagram illustrating a configuration of the storage illustrated in FIG. 2.
FIGS. 3A and 3B are views illustrating a first display layer and a depth map of the first display layer, according to an exemplary embodiment of the present inventive concept;
FIGS. 4A and 4B are views illustrating the first display layer, before and after a user input is sensed, and a second display layer, according to an exemplary embodiment of the present inventive concept;
FIG. 5 is a flowchart illustrating a method of rendering a display layer according to a refractive index and a reflectance, according to an exemplary embodiment of the present inventive concept;
FIG. 6 is a view illustrating a method of generating a specular highlight according to an exemplary embodiment of the present inventive concept;
FIGS. 7A and 7B are views illustrating an example of a visual effect of a ripple in response to a user input, according to an exemplary embodiment of the present inventive concept;
FIGS. 8A to 8C are views illustrating the first display layer and the second display layer when a plurality of display items are displayed, according to an exemplary embodiment of the present inventive concept;
FIGS. 9A and 9B are views illustrating an example of a visual effect in which a display item appears to submerge into water in response to a user input, according to an exemplary embodiment of the present inventive concept;
FIG. 10 is a flowchart illustrating a method of displaying an image from the user terminal, according to an exemplary embodiment of the present inventive concept;
FIGS. 11A to 11C are views illustrating changes to a gravity display layer and a depth map with respect to a degree of a tilt of the user terminal, according to an exemplary embodiment of the present inventive concept;
FIG.12 are views illustrating a method of providing a caustic effect, according to an exemplary embodiment of the present inventive concept;
FIG.13 are views illustrating an example of a visual effect of changes in a flow of water with respect to a degree of a tilt of the user terminal, according to an exemplary embodiment of the present inventive concept; and
FIG.14 is a flowchart illustrating a method of displaying an image from the user terminal, according to an exemplary embodiment of the present inventive concept.

### DETAILED DESCRIPTION OF THE EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept while referring to the figures.

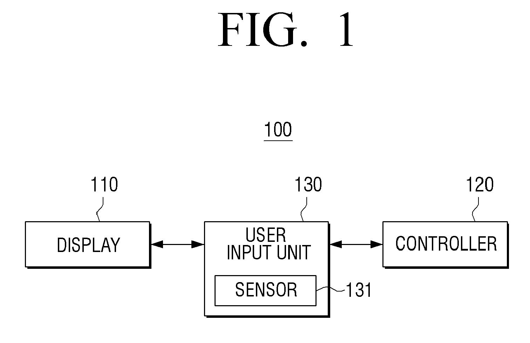

FIG. 1 is a block diagram illustrating a configuration of a user terminal 100 according to an exemplary embodiment of the present inventive concept. As illustrated in FIG.1, the user terminal 100 may include a display 110, a user input unit 130, and a controller 120. For example, the user terminal 100 may be embodied as a smart phone, but the present inventive concept is not limited thereto. The user terminal 100 may be embodied in various electronic devices such as, for example, a tablet personal computer (PC), a notebook PC, a desktop PC, a smart television (TV), and the like.

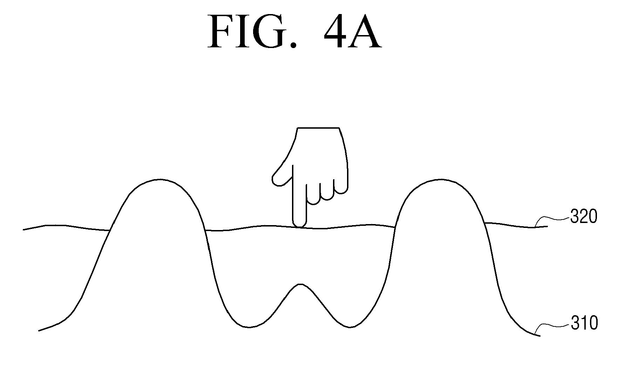

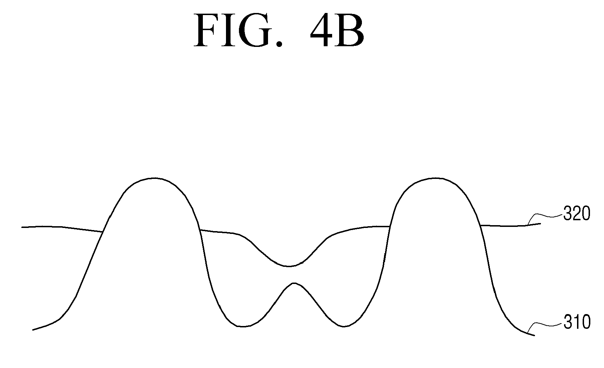

The display 110 may output image data under the control of the controller 130. In particular, the display 110 may output the image data by using a first display layer 310 (see FIGS. 4A and 4B) and a second display layer 320 (see FIGS. 4A and 4B). A depth of the first display layer 310 may be different from a depth of the second display layer 320.

In this case, the first display layer 310 may be an image display layer configured to display an image and may have a fixed depth. The second display layer 320 may be a semitransparent display layer configured to have a particular transparency (for example, the transparency of a surface of water), and may have a depth that is changeable according to a user input. Accordingly, the display 110 may provide a visual effect, for example, in which an image that is displayed on the first display layer 310 appears to submerge into water. In addition, the display 110 may calculate a refractive index (for example, using Snell's law) and a reflectance, according to a change in the depth of the second display layer 320, and may adjust the image data of the first display layer 310 by providing a visual effect (for example, a specular highlight) according to the calculated refractive index and reflectance.

The user input unit 130 may sense a user input to control the user terminal 100. For example, the user input unit 130 may be embodied as a touch screen, but the present inventive concept is not limited thereto. The user input unit 130 may be embodied in various other input units such as, for example, a mouse, a pointing device, and the like.

Optionally, the user input unit 130 may include a sensor 131 (for example, an acceleration sensor, a gyro sensor, or the like) configured to sense a tilt of the user terminal 100.

The controller 120 may control overall operations of the user terminal 100 according to a user command which may be inputted by the user input unit 130.

For example, in response to a user input being sensed by the user input unit 130 while the display 110 displays a plurality of display layers that have different depths overlapped with each other, the controller 120 may control the display 110 to provide an image effect in response to the user input by changing a depth of at least one of the plurality of display layers according to the user input.

For example, in response to a user input being sensed by the user input unit 130, the controller 120 may change a depth, at a point where the user input is sensed, of the second display layer 320, and may provide a visual effect that corresponds to the user input at the point where the user input is sensed by using the first display layer 310 and the second display layer 320 that has a changed depth.

For example, when the second display layer 320 is a semitransparent display layer that has a transparency of a surface of water, the controller 120 may calculate a refractive index and a reflectance at the point where the user input is sensed by using the first display layer 310 and the second display layer 320 that has the changed depth, and may provide, according to the calculated refractive index and reflectance, a visual effect (for example, a specular highlight) that corresponds to the user input.

For example, the controller 120 may control the display 110 to display a visual effect of, for example, a ripple at the point where the user input is sensed.

For example, when a display screen is a wallpaper screen configured to display a plurality of display items, an area where the plurality of display items are displayed from the first display layer 310 may have a high depth value, and an area where the plurality of display items are not displayed from the first display layer 310 may have a low depth value. In addition, the second display layer 320 may have a depth value between the depth value of the area where the plurality of display items are displayed and the depth value of the area where the plurality of display items are not displayed.

In response to a user input being sensed on one of the plurality of display items while the display 110 displays a starting screen that displays the plurality of display items, the controller 120 may provide a visual effect, for example, in which the display item where the user input is sensed appears to submerge into water. This visual effect may be provided by adjusting a depth value at the point where the user input is sensed from the first display layer 310 to be lower than a depth value of the second display layer 320.

In this manner, the user terminal 100 may provide a user with a realistic and natural three-dimensional visual effect in response to a user input.

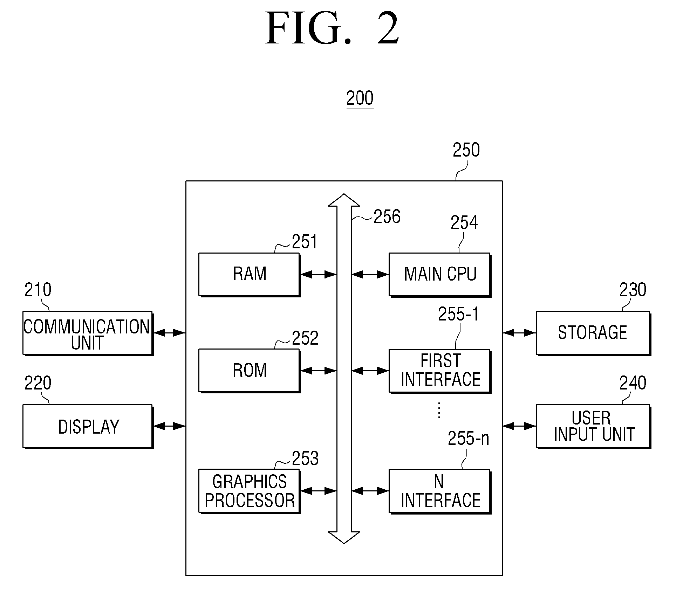

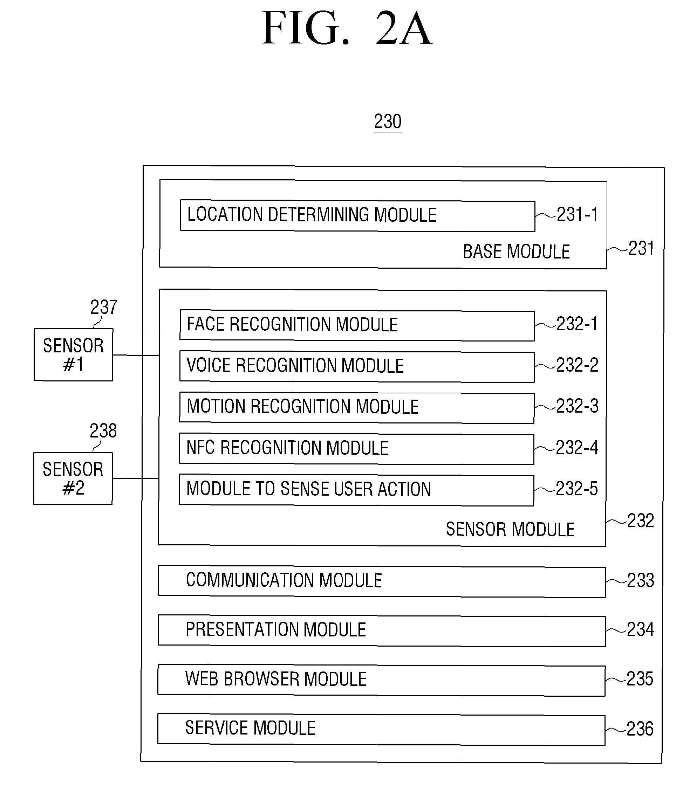

Below, the user terminal 100 is explained in greater detail with reference to FIG. 2 through FIG. 9B.

FIG. 2 is a block diagram illustrating a configuration of a user terminal 200 according to an exemplary embodiment of the present inventive concept. As illustrated in FIG. 2, the user terminal 200 may include a communication unit 210, a display 220, a storage 230, a user input unit 240, and a controller 250.

FIG. 2 illustrates a variety of components of the user terminal 200 synthetically in a case in which the user terminal 200 may include various functions such as, for example, a function of providing communications, a function of outputting an image, a function of providing a visual effect, and the like. Therefore, according to an exemplary embodiment of the present inventive concept, a part of the components illustrated in FIG. 2 may be omitted or changed, and/or other components may be added.

The communication unit 210 may be a component configured to perform communication with various types of external apparatuses or external servers according to various types of communication methods. The communication unit 210 may include various communication chips such as, for example, an Institute of Electrical and Electronics Engineers (IEEE) 802.11 b Direct Sequence (Wi-Fi) chip, a Bluetooth chip, a Near Field Communication (NFC) chip, a wireless communication chip, and the like. Herein, the Wi-Fi chip, the Bluetooth chip, and the NFC chip may perform communication, respectively, in a Wi-Fi method, a Bluetooth method, and a NFC method. The NFC chip may refer to a chip that operates in the NFC method using a 13.56 MHz band from among various Radio Frequency Identification (RF ID) frequency bands such as, for example, 135kHz, 13.56MHz, 433MHz, 860-960MHz, and 2.45GHz. When a Wi-Fi chip or a Bluetooth chip is used, various connection information, such as, for example, Sub System Identification (SSID), and a session key may first be transmitted and received in order to establish communication, then various information may be transmitted and received by using the connection information. The wireless communication chip may refer to a chip that performs communication according to various communication standards such as, for example, those of the IEEE, the ZigBee specification, Third Generation of Mobile Telecommunications Technology (3G), Third Generation Partnership Project (3GPP), Long Term Evolution (LTE), and the like.

In an embodiment of the present inventive concept, the communication unit 210 may receive image data from an external apparatus or an external server.

The display 220 may output the image data under the control of the controller 250. In an embodiment of the present inventive concept, the display 220 may output the image data by using a plurality of display layers that have different depths.

For example, the display 220 may output the image data by using an image display layer 310 (see FIGS. 4A and 4B) configured to display an image and a semitransparent display layer 320 (see FIGS. 4A and 4B) configured to have a transparency of a surface of water.

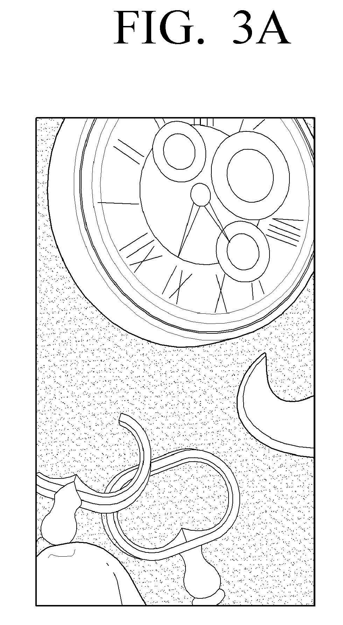

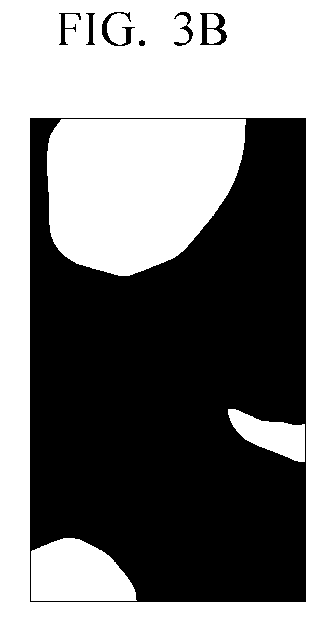

In this case, the image display layer 310 may have a depth according to a displayed image. For example, when the image display layer 310 displays an image as illustrated in FIG. 3A, the image display layer 310 may have a depth map as illustrated in FIG. 3B. For example, in an embodiment of the present inventive concept, the image display layer 310 may not change a depth according to a user input. Alternatively, the image display layer 310 may change a depth according to a user input. In an embodiment of the present inventive concept, the semitransparent display layer 320 may be located on the image display layer 310 and may change a depth according to a user input. In an embodiment of the present inventive concept, the semitransparent display layer 320 may have a depth value that is higher than a depth value of the image display layer 310 overall. Alternatively, the semitransparent display layer 320 may have a depth value that is lower than the depth value of the image display layer 310 in a part of an area.

For example, by outputting an image by using the image display layer 310 configured to display an image and the semitransparent display layer 320 configured to have the transparency of a surface of water, the display 220 may provide a user with a visual effect, for example, in which an image that is displayed on the image display layer 310 appears to submerge into water. That is, the display 220 may provide various visual effects to the image that is displayed on the image display layer 310. For example, the controller 250 may calculate a refractive index (for example, using Snell's law) and a reflectance and the display 220 may adjust the image data according to the calculated refractive index and the reflectance of a surface shape of the semitransparent layer 320 to provide visual effects such as, for example, a specular highlight and a change in appearance due to refraction.

In an embodiment of the present inventive concept, in response to a user input being sensed by the user input unit 240, the display 220 may display an image that is displayed by the image display layer 310 by using a semitransparent display layer 320 whose depth (or shape) is changed under the control of the controller 250. For example, the display 220 may provide a user with a visual effect of, for example, a ripple at a point where the user input is sensed.

The display 220 may be embodied, for example, as a Liquid Crystal Display (LCD), but the present inventive concept is not limited thereto. Alternatively, the display 220 may be embodied in various forms such as, for example, an Organic Light-Emitting Diode (OLED), a thin film transistor (TFT), a Cathode-Ray Tube (CRT), and the like.

The storage 230 may store various modules to operate the user terminal 200. FIG. 2A is a block diagram illustrating a configuration of the storage 230 illustrated in FIG. 2. For example, the storage 230 may store software that includes a base module 231, a sensor module 232, a communication module 233, a presentation module 234, a web browser module 235, and a service module 236. In this case, the base module 231 may be a basic module that may process signals transmitted from at least one hardware device included in the user terminal 200 and may transmit the processed signals to an upper layer module. The sensor module 232 may be a module that may collect information from various sensors 237 and 238, and may analyze and manage the collected information. The sensor module 232 may include, for example, a face recognition module 232-1, a voice recognition module 232-2, a motion recognition module 232-3, a NFC recognition module 232-4, and the like. The presentation module 234 may be a module to configure a display screen and may include, for example, a multimedia module, to play and to output multimedia content, and a User Interface (UI) rendering module, to perform UI processing and graphics processing. The communication module 233 may be a module to perform communications with external devices. The web browser module 235 may refer to a module that accesses a web server by performing web browsing. The service module 236 may be a module that includes various applications to provide various services.

The storage 230 may include various program modules as described above, but program modules may be omitted, changed, and/or added according a type and characteristic of the user terminal 200. For example, when the aforementioned user terminal 200 is embodied as a smart phone, the base module 231 may further include a location determining module 231-1 to determine a location based on a Global Positioning System (GPS), and the sensor module 232 may further include a module 232-5 to sense a user action.

The user input unit 240 may receive a user command to control the user terminal 200. The user input unit 240 may sense a user input that selects one of a plurality of display items that may be displayed on the display 220.

In an embodiment of the present inventive concept, when the user input unit 240 is embodied as a touch screen, the user input unit 240 may sense a user touch to a part of an entire area of the touch screen.

For example, in an embodiment of the present inventive concept, the user input unit 240 may be embodied as a touch screen. Alternatively, the user input unit 240 may be embodied as another form of input unit configured to control the user terminal 200, such as, for example, a pointing device, a mouse, and the like.

The controller 250 may control overall operations of the display 200 by using various programs stored in the storage 230.

As illustrated in FIG. 2, the controller 250 may include a Random Access Memory (RAM) 251, a Read Only Memory (ROM) 252, a graphics processor 253, a main Central Processing Unit (CPU) 254, a first through n interfaces 255-1 through 255-n, and a bus 256. In this case, the RAM 251, the ROM 252, the graphics processor 253, the main CPU 254, and the first through n interfaces 255-1 through 255-n may be connected to each other through the bus 256.

The ROM 252 may store a command set for booting a system. In response to a turn-on command being inputted and power being supplied, the main CPU 254, according to a command stored in the ROM 252, may copy an Operating System (O/S) stored in the storage 230 into the RAM 251, may operate the O/S, and may boot the system. In response to the booting being completed, the main CPU 254 may copy various application programs stored in the storage 230 into the RAM 251, may execute the application programs that are copied into the RAM 251, and may perform various operations.

The graphics processor 253 may generate a screen that includes various objects such as, for example, an icon, an image, a text, and the like by using a calculator (not illustrated) and a rendering unit (not illustrated). The calculator may calculate, according to a control command received from the user input unit 240, a value of an attribute such as, for example, a value of a coordinate where an object is displayed according to a layout of the screen, a shape of the object, a size of the object, and/or a color of the object. The rendering unit may generate a screen that has various layouts that include an object based on a value of an attribute calculated by the calculator. The screen generated by the rendering unit may be displayed within a display area of display 220.

The main CPU 254 may access the storage 230 and may perform a booting by using the O/S stored in the storage 230. In addition, the main CPU 254 may perform various operations by using various programs, contents, data, and the like stored in the storage 230.

The first through n interfaces 255-1 through 255-n may be connected to the aforementioned various components. One of the interfaces may be, for example, a network interface that may be configured to be connected to an external apparatus through a network.

In an embodiment of the present inventive concept, in response to a user input being sensed by the user input unit 240 while the display 220 displays a plurality of display layers that have different depths that are overlapped with each other, the controller 250 may control the display 220 to change a depth of at least one of the plurality of display layers according to the user input and may provide a visual effect in response to the user input.

For example, as illustrated in FIG. 4A, the display 220 (see FIG. 2) may display an image by overlapping the image display layer 310 with the semitransparent display layer 320, which may have different depths. In this case, the controller 250 (see FIG. 2) may control the display 220 to provide a visual effect, for example, in which an image that is displayed on an area that has a depth value that is lower than a depth value of the semitransparent display layer 320 from the image display layer 310 appears to submerge into water.

For example, the controller 250 may control the display 220 to calculate a refractive index and a reflectance of the area of the image display layer 310 that has the depth value that is lower than the depth value of the semitransparent display layer, and may provide the visual effect, according to the calculated refractive index and reflectance, in which an image appears to submerge into water.

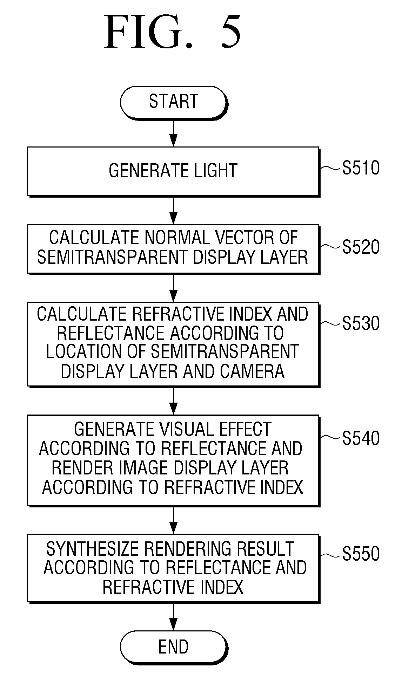

The method of rendering, by the controller 250, a display layer according to a refractive index and reflectance is explained with reference to FIG. 5. At an operation S510, the controller 250 may generates light. For example, the light may be located at an arbitrary space area.

At an operation S520, the controller 250 may calculate a normal vector of the semitransparent display layer 320. For example, the controller 250 may calculate a vertical vector of each pixel as a normal vector of each pixel of the semitransparent display layer 320.

At an operation S530, the controller 250 may calculate a refractive index and a reflectance of each pixel according to a surface of the semitransparent display layer 320 and a location of a camera (not illustrated). For example, the controller 250 may calculate a refractive index and a reflectance of each pixel according to the location of the camera and a direction of a normal vector of a display layer by using the Fresnel equations.

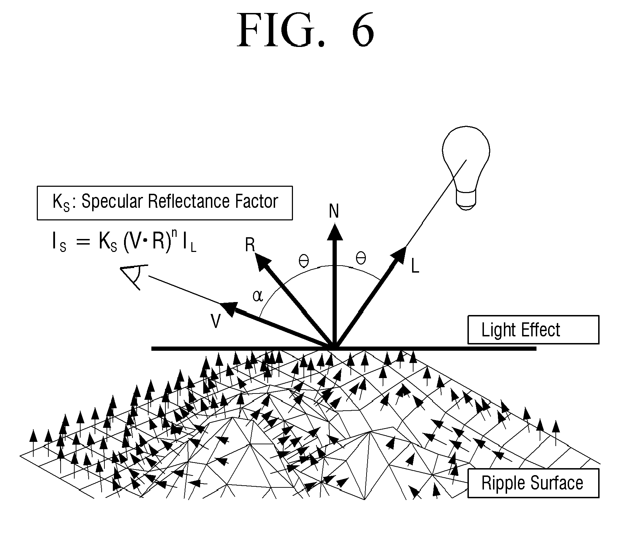

At an operation S540, the controller 250 may generate a visual effect according to the reflectance, and may render the first display layer 310 according to the refractive index. For example, the controller 250 may process the light to produce a specular highlight as the visual effect according to the calculated reflectance, and/or may project the light on the semitransparent layer 320 by using an environment map (not illustrated). For example, the controller 250 may generate the specular highlight by first generating a three-dimensional mesh of the surface of the water by using a Height field of a ripple as illustrated in FIG. 6, then adding light at an arbitrary location, and then performing a three-dimensional shading operation according to a location and an angle of the light, the camera, and the surface of the water. Furthermore, for example, the controller 250 may render the image display layer 310 by using a refractive index, which may be calculated according to Snell's law.

At an operation S550, the controller 250 may synthesize a rendering result according to the reflectance and the refractive index. Furthermore, for example, the controller 250 may control the display 220 to output an image that is rendered according to the reflectance and the refractive index.

Through the aforementioned process, a visual effect may be provided in which an image that is displayed on an image display layer appears to submerge into water.

For example, as illustrated in FIG. 4A, in response to a touch by a user being sensed at an arbitrary area of a touch screen while the image display layer 310 and the semitransparent display layer 320, which have different depths that are overlapped with each other, display an image, the controller 250 may decrease a depth value at the point where the touch by the user is sensed from the semitransparent display layer 320, as illustrated in FIG. 4B. For example, the decreased depth value may vary according to a strength of the touch by the user. For example, in response to a stronger touch by the user, the controller 250 may decrease the depth value more, and in response to a weaker touch by the user, the controller 250 may decrease the depth value less. For example, FIG. 4B is a view that illustrates a moment when a touch by a user is sensed on the semitransparent display layer 320. In response to the touch by the user being sensed, a depth value of the semitransparent display layer 320 may be changed to appear as through waves rise for a predetermined period of time.

In response to the depth value of the semitransparent display layer 320 being changed, the controller 250 may calculate a refractive index and a reflectance again by using a method illustrated in FIG. 5, and may render and may output a display layer.

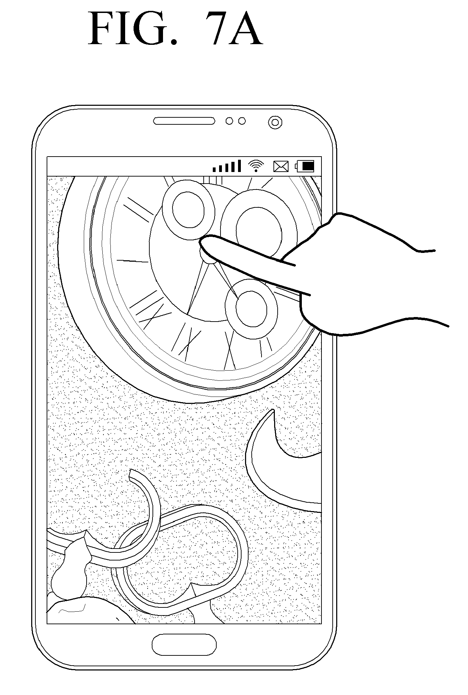

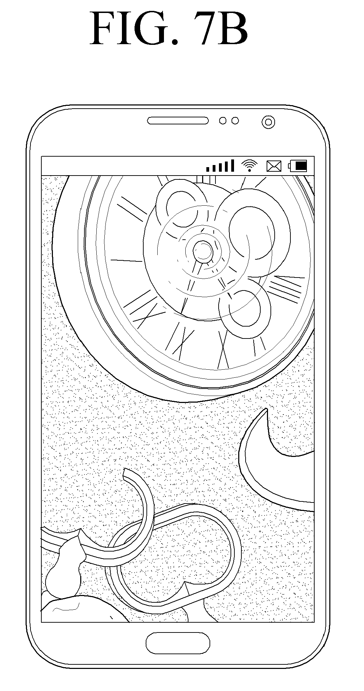

Hence, the controller 250 may control the display 220 to generate a visual effect of, for example, a ripple at the point where the touch by the user is sensed. For example, as illustrated in FIG. 7A, in response to a touch by a user at a particular area being sensed while an image is rendered, the controller 250 may control the display 220 to provide the visual effect of, for example, the ripple, as illustrated in FIG. 7B. In this case, the controller 250 may provide the visual effect of, for example, the ripple based on a depth of an image display layer 310. That is, as illustrated in FIG. 7B, the controller 250 may control the display 220 to form and display the visual effect of, for example, the ripple more in a direction where a depth value is low than in a direction where the depth value is high.

In this manner, the user terminal 200 may provide a user with a more realistic and natural three-dimensional visual effect of, for example, a ripple.

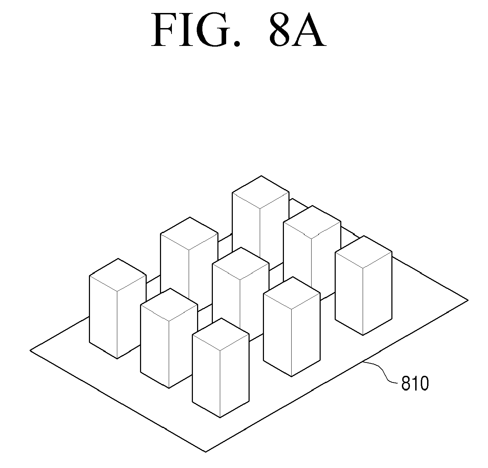

Below, another exemplary embodiment is explained with reference to FIG. 8A through FIG. 9B.

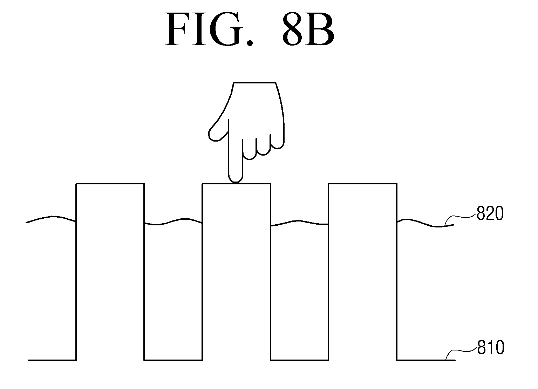

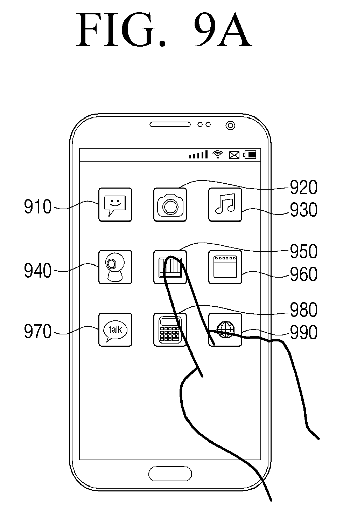

For example, as illustrated in FIG. 9A, while a plurality of display items 910 through 990 are displayed, an image display layer 810 (see FIG. 8A) may have a high depth value at an area where the display items 910 through 990 are located, and may have a low depth value at an area where the display items 910 through 990 are not located. In addition, as illustrated in FIG. 8B, a semitransparent display layer 820 may have a depth value between the depth value of the area where the display items 910 through 990 are located and the depth value of the area where the display items 910 through 990 are not located.

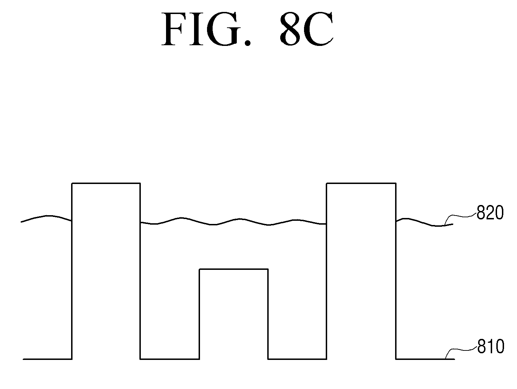

In this case, as illustrated in FIG. 8B, in response to a command issued from a user by touching one of the plurality of display items 910 through 990 being inputted while the image display layer 810 and the semitransparent display layer 820, which have different depths that are overlapped with each other, display an image, the controller 250 may adjust a depth value at an area where the touched display item is located to be lower than a depth value of the semitransparent display layer 820, as illustrated in FIG. 8C. Hence, the controller 250 may provide a user with the visual effect that the touched display item appears to submerge into water.

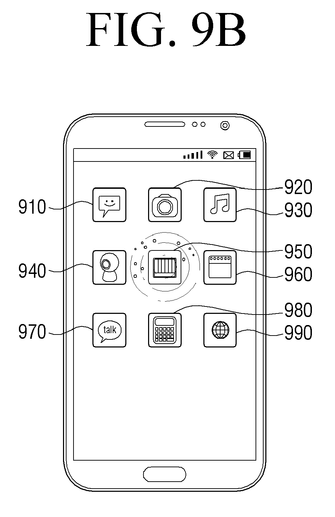

For example, as illustrated in FIGS. 8B and 9A, in response to a fifth display item 950 being touched while the plurality of display items 910 through 990 are displayed, the controller 250 may provide a user with the visual effect that the fifth display item 950 appears to submerge into water by adjusting a depth value at an area where the touched fifth display item 950 is located on the image display layer 810 to be lower than a depth value of the semitransparent display layer 820, as illustrated in FIGS. 8C and 9B.

In this manner, the user terminal 200 may provide a user with a realistic and natural three-dimensional visual effect in response to a user input.

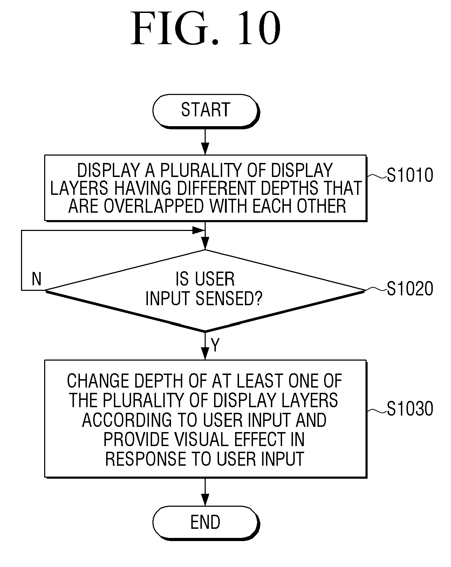

Below, a method of displaying an image from the user terminal 100 is explained with reference to FIG. 10.

At an operation S1010, the user terminal 100 may display a plurality of display layers that have different depths that are overlapped with each other. For example, the user terminal 100 may display an image by overlapping the first display layer 310, configured to display an image with the second display layer 320 configured to have a transparency of a surface of water.

At an operation S1020, the user terminal 100 may determine whether a user input is sensed.

At an operation S1030, in response to the user input being sensed, the user terminal 100 may change a depth of at least one of the plurality of display layers according to the user input, and may provide a visual effect in response to the user input. For example, the user terminal 100 may provide a user with the visual effect of a ripple as explained above with reference to FIG. 3A through FIG. 7B, and may provide the user with the visual effect in which a display item appears to submerge into water as explained above with reference to FIG. 8A through FIG. 9B.

In this method of outputting an image, the user terminal 100 may provide the user with a realistic and natural three-dimensional visual effect in response to a user input.

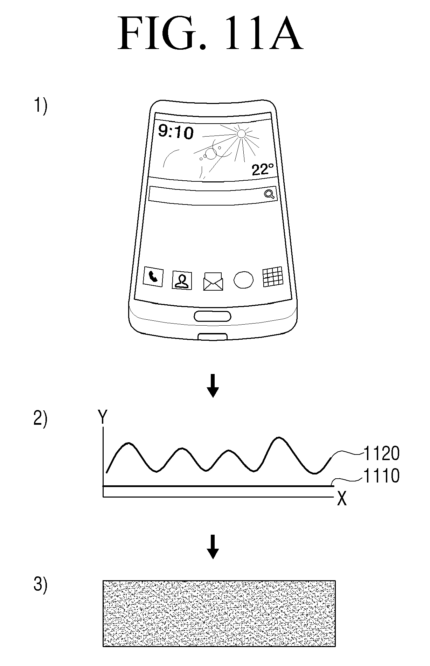

Below another exemplary embodiment is explained with reference to FIGS. 11A through 14. For example, the user terminal 200 may provide a visual effect of changes in a flow of water due to gravity based on a tilt of the user terminal 200. In an exemplary embodiment of the present inventive concept, the display 220 of the user terminal 200 may have a curved shape.

For example, the display 220 may display a plurality of display layers having different depths that are overlapped with each other. For example, a display layer may include an image display layer which displays an image, a gravity display layer which illustrates an effect of gravity, and a semitransparent display layer configured to have a particular transparency (for example, the transparency of a surface of water). In this case, the image display layer, the gravity display layer, and the semitransparent display layer may have, for example, depths different from each other. Also, for example, the image display layer may have a fixed depth, and the gravity display layer and the semitransparent display layer each may have a depth that is changeable according to a user input.

For example, while the display 220 displays a plurality of display layers having different depths that are overlapped with each other, when a user input to tilt the user terminal 200 is sensed through the user input 240, the controller 250 may control the display 220 to provide a visual effect, in response to the user input, by adjusting a depth of the gravity display layer from among the plurality of display layers.

For example, as illustrated in a view 1) of FIG. 11A, when the user terminal 200 is not tilted, the controller 250, as illustrated in a view 2) of FIG. 11A, may display an image by in which a gravity display layer 1110 and a semitransparent display layer 1120 may have different depths that may be overlapped with each other. In this case, a depth value of the gravity display layer 1110 may be lower than a depth value of the semitransparent display layer 1120. Additionally, the gravity display layer 1110 may be presented as a depth map as illustrated in a view 3) of FIG. 11A. Furthermore, although an image display layer is not illustrated in FIG. 11A, a depth value of the image display layer may be, for example, lower than the depth value of the gravity display layer 1110.

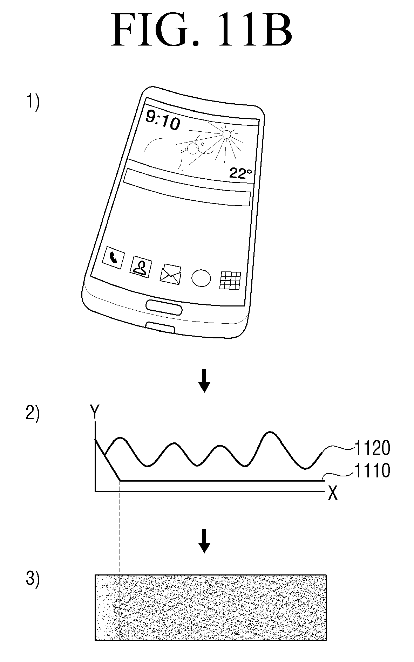

In addition, as illustrated in a view 1) of FIG. 11B, when the user terminal 200 is tilted as much as a first angle (for example, 10 degrees), the controller 250, as illustrated in a view 2) of FIG. 11B, may change a depth value of the gravity display layer 1110 at an area in an opposite direction of the tilted direction of the user terminal 200. In this case, a depth value of a leftmost portion of the gravity display layer 1110 may be greater than a depth value of the semitransparent display layer 1120. Additionally, the gravity display layer 1110 may be presented as a depth map as illustrated in a view 3) of FIG. 11B.

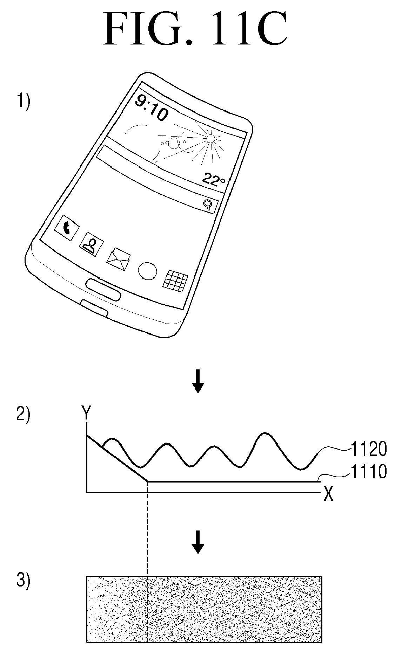

In addition, as the angle of tilt of the user terminal 200 is increased, an area of the gravity display layer 1110 whose depth value is greater than a depth value of the semitransparent display layer 1120 may be increased. For example, as illustrated in a view 1) of FIG. 11C, when the user terminal 200 is tilted as much as a second angle (for example, 20 degrees) greater than the first angle, the controller 250, as illustrated in a view 2) of FIG. 11C, may change a depth value of the gravity display layer 1110 at an area that is wider than the area whose depth value is changed when the user terminal 200 is tilted only to the extent of the first angle. In this case, the depth value of a larger leftmost portion of the gravity display layer 1110 may be greater than the depth value of the semitransparent display layer 1120. Additionally, the gravity display layer 1110 may be presented as a depth map as illustrated in a view 3) of FIG. 11C.

In addition, the controller 250, may provide a visual effect in which only a portion of an image that is displayed at an area in which a depth value of the gravity display layer 1110 is lower than a depth value of the semitransparent display layer 1120 appears to be submerged into water. That is, the controller 250, may provide a visual effect in which a portion of an image appears to be submerged under water by not providing a visual effect of a ripple (that is, displaying only the portion of the image) at the portion of the image displayed at an area where the depth value of the gravity display layer 1110 is greater than the depth value of the semitransparent display layer 1120, but providing a visual effect of a ripple at the portion of the image displayed at the area where the depth value of the gravity display layer 1110 is lower than the depth value of the semitransparent display layer 1120. Because the visual effect of an image being submerged into water has been already described above, further explanation is omitted.

In addition, the controller 250, in order to provide a more realistic visual effect of an image being submerged into water, may provide a caustic effect. In this case, a caustic effect refers to an effect in which, when light passes through a transparent object, the light is reflected into another area by refraction. For example, the controller 250 may provide the caustic effect at an area in which a depth value of the semitransparent display layer 1120 is within a preset range.

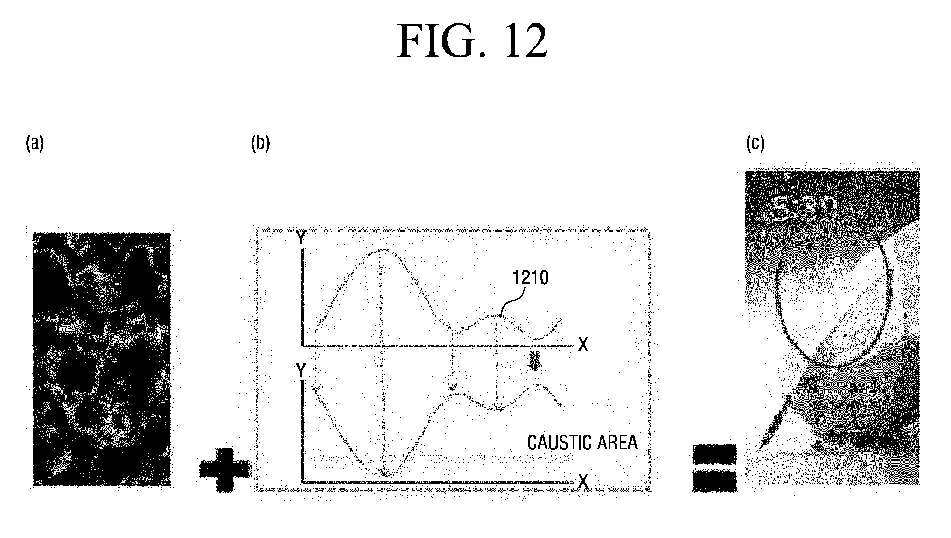

For example, the controller 250 may generate a caustic depth map as illustrated in a view (a) of FIG. 12. In this case, the controller 250 may use, for example, a caustic depth map stored in the storage 230. In addition, the controller 250, as illustrated in a view (b) of FIG. 12, may determine a caustic area that has a depth value of a preset range by reversing a depth value of the semitransparent display layer 1210. Furthermore, the controller 250 may provide the caustic effect by interpolating the caustic depth map, illustrated in the view (a) of FIG. 12, and a depth value of the caustic area, illustrated in the view (b) of FIG. 12. (An example of a caustic effect provided by such an interpolation approach is illustrated at a view (c) of FIG. 12.) That is, the controller 250 may provide a caustic effect to a caustic area by setting a caustic depth value only for an area that corresponds to a caustic area and setting a depth value for other areas to zero. In the above-described exemplary embodiment of the present inventive concept, a caustic depth value may be set for a caustic area, and a depth value of zero may be set for other areas. Alternatively, a caustic depth value of the other areas may be set lower than a caustic depth value of the caustic area.

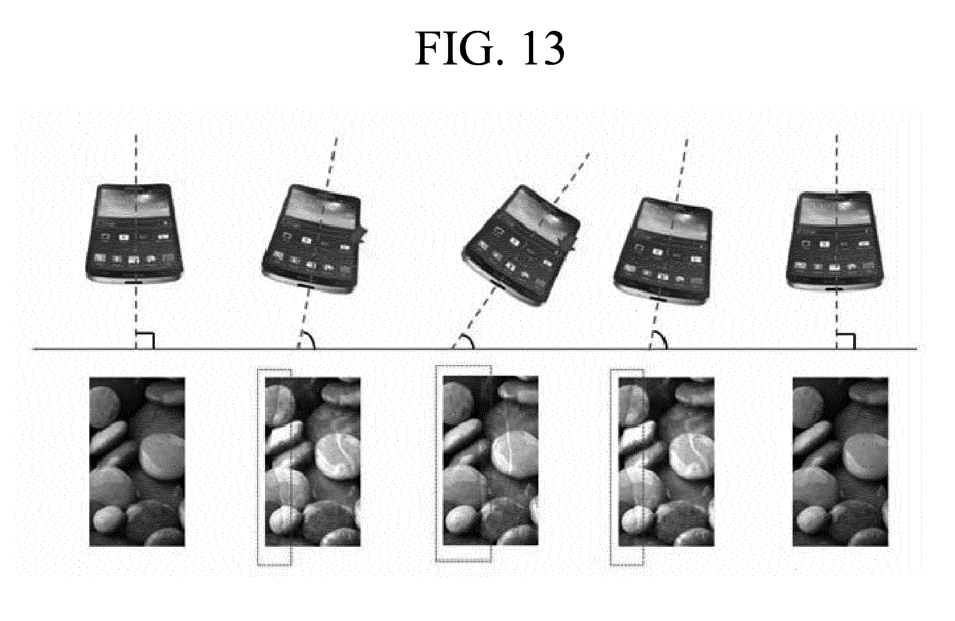

As illustrated in FIG. 13, the controller 250, as described above, may change a depth of the gravity display layer 1110, provide a caustic effect, and provide a visual effect of changes in a flow of water according to a degree of tilt of the user terminal 200. For example, when the user terminal 200 is tilted in a direction to the right, the controller 250 may provide a visual effect in which water appears to flow in a direction to the right and a left area of the image appears to be out of water, and when the user terminal 200 is tilted back in a direction to the left (e.g., back to the original position of the user terminal 200), the controller 250 may provide a visual effect in which water appears to flow in a direction to the left and a left area of the image appears to be submerged into water again.

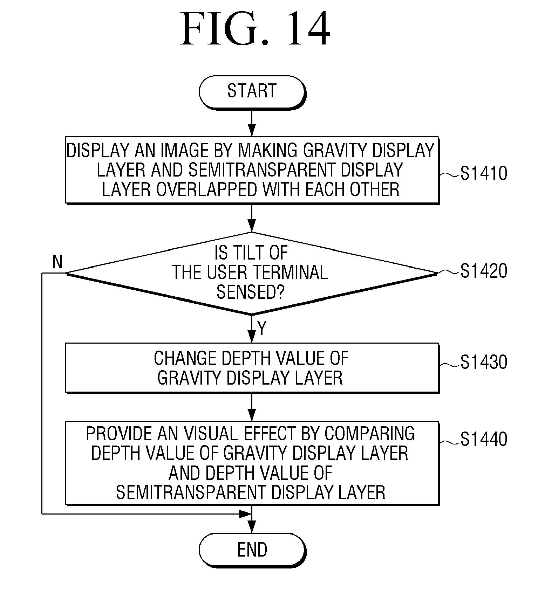

Below, a method of displaying an image of the user terminal 200 according to an exemplary embodiment of the present inventive concept is explained with reference to FIG. 14.

At an operation S1410, the user terminal 200 may display an image by making the gravity display layer 1110 and the semitransparent display layer 1120 overlapped with each other. For example, a depth value of the gravity display layer 1110 may be lower than a depth value of the semitransparent display layer 1120.

At an operation S1420, the user terminal 200 may sense a tilt of the user terminal 200.

If, at an operation S1420-Y, a tilt of the user terminal 200 is sensed, the user terminal 200, at an operation S1430, may change a depth value of the gravity display layer 1120. For example, the user terminal 200 may change a depth value at an area located in a direction opposite of the direction of the tilt of the user terminal 200, and as the angle of the tilt of the user terminal 200 increases, so may a size of the area where the depth value is changed.

At an operation S1440, the user terminal 200 may provide a visual effect by comparing a depth value of the gravity display layer 1110 and a depth value of the semitransparent display layer 1120. For example, the user terminal 200 may provide a visual effect in which only a portion of an image located at an area in which a depth value of the gravity display layer 1110 is lower than a depth value of the semitransparent display layer 1120 appears to be submerged into water, and a portion of the image located at an area in which a depth value of the gravity display layer 1110 is greater than a depth value of the semitransparent display layer 1120 appears to be out of water, without providing a visual effect of a ripple. In addition, to provide a more realistic visual effect of an image being submerged into water, the user terminal 200 may provide a caustic effect at an area in which a depth value of the semitransparent layer 1120 is within a preset range.

As described above, a visual effect of changes in a flow of water due to gravity may be provided on a displayed image by adjusting a depth value of the gravity display layer 1110 in accordance with a degree of tilt of the user terminal 200. In addition, by providing the caustic effect together with the visual effect of changes in the flow of water, a more realistic image may be provided.

The methods of outputting an image of the user terminal 200, according to the above described various exemplary embodiments of the present inventive concept, may be provided to a display apparatus, for example, by being embodied as a program. In an embodiment of the present inventive concept, a program that includes the method of outputting an image of the user terminal 100 may be stored and provided in a computer-readable medium. The computer-readable medium can include a non-transitory computer-readable recording medium and a computer-readable transmission medium.

The non-transitory computer-readable recording medium is other than a medium that stores data for a short period, such as a register, a cache, or a similar type of memory, but refers to a medium that semi-permanently stores data and is readable by a device. For example, various applications and programs as described above may be stored and provided in the non-transitory computer-readable recording medium, such as a read-only memory (ROM), a random-access memory (RAM), a compact disc (CD), a CD-ROM, a digital versatile disk (DVD), a hard disk, a Blu-ray disk, a universal serial bus (USB), a memory card, magnetic tapes, floppy disks, optical data storage devices, and the like. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present inventive concept have been shown and described, it will be appreciated by those skilled in the art that changes may be made in these embodiments without departing from the principles of the general inventive concept, the scope of which is defined in the appended claims and their equivalents.

## Claims

1. A method of displaying an image, the method comprising:
displaying, on a user terminal (100), a plurality of display layers having different depths that are overlapped with each other; and
in response to a user input being sensed, changing a depth of at least one of the plurality of display layers according to the user input, and providing a visual effect in response to the user input.

2. The method as claimed in claim 1, wherein the plurality of display layers comprise a first display layer configured to display the image, and a second display layer configured to have a transparency of a surface of water.

3. The method as claimed in claim 2, wherein the first display layer has a fixed depth, and the second display layer has a depth that is configured to change according to the user input.

4. The method as claimed in claim 3, wherein the providing comprises:
in response to the user input being sensed, changing a depth of the second display layer at a point where the user input is sensed; and
providing the visual effect in response to the user input at the point where the user input is sensed by using the first display layer and the second display layer having the depth changed according to the user input.

5. The method as claimed in claim 4, wherein the providing the visual effect in response to the user input at the point where the user input is sensed comprises:
calculating a refractive index and a reflectance at the point where the user input is sensed by using the first display layer and the second display layer having the depth changed according to the user input; and
providing the visual effect in response to the user input according to the calculated refractive index and reflectance.

6. The method as claimed in claim 5, wherein the visual effect is a ripple effect.

7. The method as claimed in claim 2, wherein when a display screen (110) displays a plurality of display items, an area where the plurality of display items are displayed from the first display layer has a high depth value, and an area where the plurality of display items are not displayed from the first display layer has a low depth value.

8. The method as claimed in claim 7, wherein the second display layer has a depth value between the depth value of the area where the plurality of display items are displayed and the depth value of the area where the plurality of display items are not displayed.

9. The method as claimed in claim 8, wherein the providing comprises, in response to the user input being sensed on one of the plurality of display items, providing the visual effect in which a display item where the user input is sensed appears to submerge into water by adjusting a depth value of the first display layer at a point where the user input is sensed to be lower than the depth value of the second display layer.

10. The method as claimed in any one of claim 1 to claim 9, wherein the providing comprises, in response to the user input being sensed as a tilt of the user terminals (100), changing the depth of the at least one of the plurality of display layers according to a degree of the tilt of the user terminal.

11. The method as claimed in claim 10, wherein the plurality of display layers comprise a first display layer configured to display the image, a second display layer configured to have a preset transparency, and a third display layer configured to illustrate an effect of gravity.

12. The method as claimed in claim 11, wherein the providing comprises changing the depth of the third display layer so that a depth value at an area located in a direction opposite of a direction of the tilt of the user terminal is greater than depth values at other areas of the third display layer.

13. The method as claimed in claim 12, wherein the providing comprises providing the visual effect in which only a portion of the image that is displayed at the area in which the depth value of the third display layer is lower than a depth value of the second display layer appears to be submerged into water.

14. The method as claimed in claim 11, wherein the providing comprises providing a caustic effect to an area of the second display layer in which a depth value is within a preset range.
wherein the providing the caustic effect further comprises:
generating a caustic depth map;
determining a caustic area in which a depth value is within the preset range by reversing the depth value of the second display layer; and
interpolating the caustic depth map and the depth value of the caustic area.

15. A user terminal (100), comprising:
a display (110) configured to display a plurality of display layers having different depths that are overlapped with each other;
a user input unit (130) configured to sense a user input; and
a controller (120) configured to control, in response to the user input being sensed by the user input unit, the display to change a depth of at least one of the plurality of display layers according the user input, and to provide a visual effect in response to the user input.
